(19) Europäisches Patentamt
European Patent Office
Office européen des brevets

(11) EP 2 312 824 B1

(12) **EUROPEAN PATENT SPECIFICATION**

(45) Date of publication and mention
of the grant of the patent:
**05.06.2019 Bulletin 2019/23**

(51) Int Cl.:
***H04N 1/00*** *(2006.01)*

(21) Application number: **10180675.0**

(22) Date of filing: **28.09.2010**

(54) **Image processing apparatus, control method, and computer-readable medium**

Bildverarbeitungsvorrichtung, Steuerungsverfahren und computerlesbares Medium

Appareil de traitement d'images, procédé de contrôle et support lisible sur ordinateur

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.10.2009 JP 2009240878
04.02.2010 JP 2010023550
15.09.2010 JP 2010207157**

(43) Date of publication of application:
**20.04.2011 Bulletin 2011/16**

(73) Proprietor: **CANON KABUSHIKI KAISHA
Ohta-ku
Tokyo 146-8501 (JP)**

(72) Inventor: **NAKASHIO, Hidekazu
Tokyo, Tokyo 146-8501 (JP)**

(74) Representative: **TBK
Bavariaring 4-6
80336 München (DE)**

(56) References cited:
**JP-A- 2009 027 225    US-A1- 2007 223 038**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to an image processing apparatus, control method, and computer-readable medium for generating a print image by compositing an image such as a copy-forgery-inhibited pattern image.

Description of the Related Art

There has conventionally been known a special printing method (to be referred to as "copy-forgery-inhibited-pattern printing") of making a warning message surface when a printed material is copied, in order to suppress illicit copying of a confidential document or the like. In copy-forgery-inhibited-pattern printing, a part that appears upon copying is called a "latent image", and a part that disappears or fades upon copying is called a "background image". Printing is done by compositing a copy-forgery-inhibited pattern image in which a copy-forgery-inhibited pattern formed from a latent image and background image is embedded, and an image to be printed. For example, when the latent image or background image has the shape of a warning message such as "COPY PROTECTED" or "COPY", the warning message is embedded as a copy-forgery-inhibited pattern in the copy-forgery-inhibited pattern image. In a copy-forgery-inhibited pattern-embedded printed material, the background image camouflages the latent image, so it is difficult for the user to recognize the embedded copy-forgery-inhibited pattern when he checks the printed material. However, once the copy-forgery-inhibited pattern-embedded printed material is copied, the background image disappears, the latent image appears, and the warning message surfaces as the copy-forgery-inhibited pattern in the copy. By printing a copy-forgery-inhibited pattern which surfaces upon copying, copy-forgery-inhibited-pattern printing implements a copy deterrent function.

In copy-forgery-inhibited-pattern printing, a copy-forgery-inhibited pattern image is composited in an image to be printed. In some cases, the amount of color material (to be referred to as an "amount of applied toner") applied per unit area exceeds a limit value (to be referred to as a "maximum amount of applied toner") which is set in advance in an image processing apparatus. That is, even if an image to be printed is generated so as not to exceed the maximum amount of applied toner, the amount of applied toner may still exceed said maximum amount because a copy-forgery-inhibited pattern image is added later. Printing with more than the maximum amount of applied toner may cause a fixing error and damage the engine. To prevent this, the entire image signal level after composition needs to be decreased to a predetermined value. This processing method can be, for example, a method disclosed in Japanese Patent Laid-Open No. 2009-27225. More specifically, a print image undergoes density correction, and the corrected print image and a copy-forgery-inhibited pattern image are composited. This can prevent degradation of the copy deterrent function of the copy-forgery-inhibited pattern image, and achieve density correction.

However, the technique disclosed in Japanese Patent Laid-Open No. 2009-27225 suppresses consumption of print consumables in copy-forgery-inhibited-pattern printing, and density correction is always done for a print image. Even if the amount of applied toner does not exceed the maximum amount, density correction is executed, resulting in poor quality in a copy-forgery-inhibited pattern-embedded printed material.

SUMMARY OF THE INVENTION

The present invention has been made to solve the above problems, and has as its object to prevent a fixing error generated when the amount of applied toner exceeds the maximum amount set in an image processing apparatus, and prevent unwanted degradation of the image quality of a printed material in composition printing such as copy-forgery-inhibited-pattern printing.

The present invention in its first aspect provides an image processing apparatus as specified in claims 1 to 9.

The present invention in its second aspect provides an image processing method as specified in claims 10 and 11.

The present invention in its third aspect provides a computer-readable medium as specified in claim 12.

The present invention can prevent a fixing error generated when the amount of applied toner exceeds the maximum amount set in an image processing apparatus, and prevent unwanted degradation of the image quality of printed material in composition printing wherein image data such as a copy-forgery-inhibited pattern image is added.

Further features of the present invention will become apparent from the following description of exemplary embodiments (with reference to the attached drawings).

BRIEF DESCRIPTION OF THE DRAWINGS

Fig. 1 is a system block diagram for explaining the arrangement of an image processing apparatus according to an embodiment;

Fig. 2 is a block diagram for explaining the arrangement of an image processing unit according to the first embodiment;

Fig. 3 is a flowchart of exemplary processing according to the first embodiment;

Fig. 4 is a schematic exemplary view according to the first embodiment;

Fig. 5 is a block diagram for explaining the arrangement of an image processing unit according to the second embodiment;

Fig. 6 is a flowchart of exemplary processing according to the second embodiment;

Fig. 7 is a schematic exemplary view according to the second embodiment;

Figs. 8A and 8B are views for explaining print environment setting items in copy-forgery-inhibited-pattern printing according to the embodiment;

Fig. 9 is a block diagram for explaining the arrangement of an image processing unit according to the third embodiment;

Fig. 10 is a flowchart of exemplary processing according to the third embodiment;

Fig. 11 is a schematic exemplary view according to the third embodiment; and

Fig. 12 is a view for explaining an LUT generation unit 404 according to the embodiment.

DESCRIPTION OF THE EMBODIMENTS

Embodiments of the present invention will now be described with reference to the accompanying drawings.

<First Embodiment>

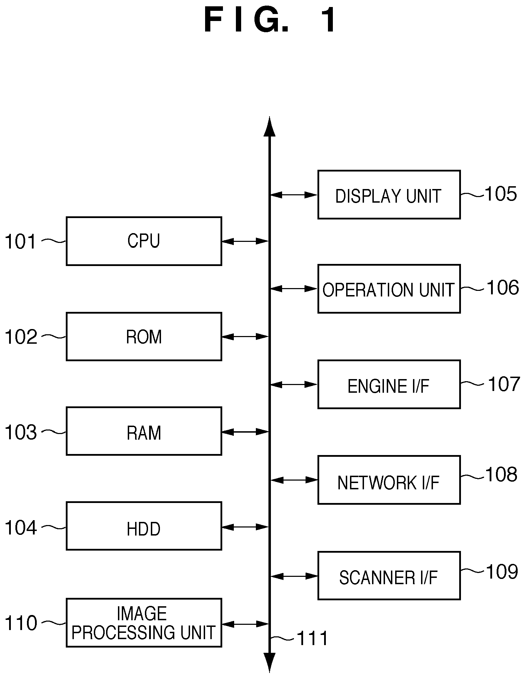

Fig. 1 is a system block diagram that explains the basic arrangement of an image processing apparatus according to the present invention. An apparatus, to which the present invention is applied, copes with an electrophotographic color or monochrome image processing apparatus using toner, such as a digital electrophotographic copying machine, laser printer, or facsimile apparatus. The image processing apparatus according to the present invention includes a CPU (Central Processing Unit) 101, ROM (Read Only Memory) 102, RAM (Random Access Memory) 103, HDD 104, display unit 105, operation unit 106, engine I/F 107, network I/F 108, scanner I/F 109, image processing unit 110, and system bus 111.

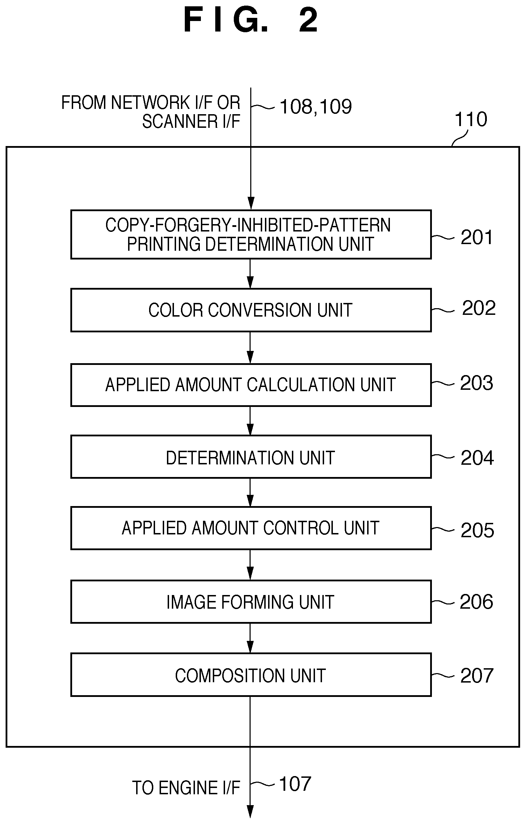

This arrangement will be described in detail. The CPU 101 controls the overall apparatus, and performs arithmetic processing and the like. The CPU 101 executes each processing in Fig. 2 (to be described later) based on a program stored in the ROM 102. The ROM 102 is a storage area for a system boot program, a program for controlling a printer engine, text data, character code information, and the like. The RAM 103 is a data storage area free from usage restriction, and is used when loading and executing programs and data for various processes. The RAM 103 is also used as a data storage area for a received image file. The HDD 104 is formed from, for example, a hard disk. The HDD 104 stores programs, information files, print images, and the like, and is used as a work area.

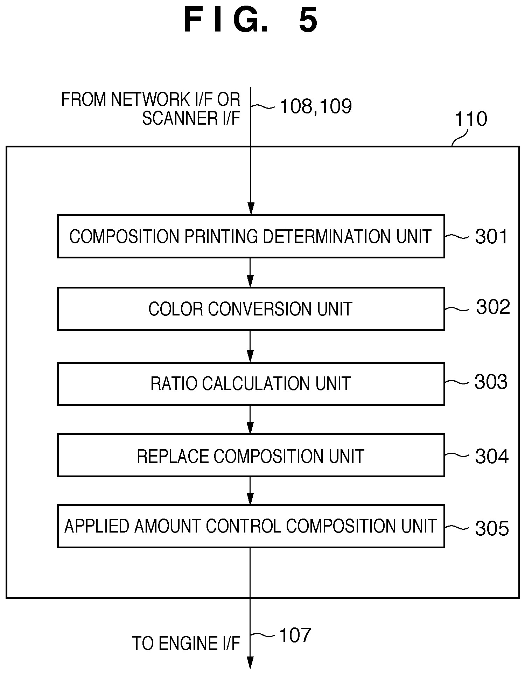

The display unit 105 provides a display using liquid crystal or the like, and is used to display an apparatus setting state, current processing in the apparatus, an error state, and the like. The operation unit 106 is used to change and reset settings. The engine I/F 107 is used to exchange commands and the like for actually controlling the printer engine. The network I/F 108 connects the apparatus to a network. The scanner I/F 109 is connected to a reader (for example, scanner unit) for reading a print image via a parallel (or serial) port. The image processing unit 110 performs desired image processing for image data received via the network I/F 108 or scanner I/F 109. Details of the image processing unit 110 will be described with reference to Figs. 2 and 5. The system bus 111 connects these building components, and serves as a data path between them.

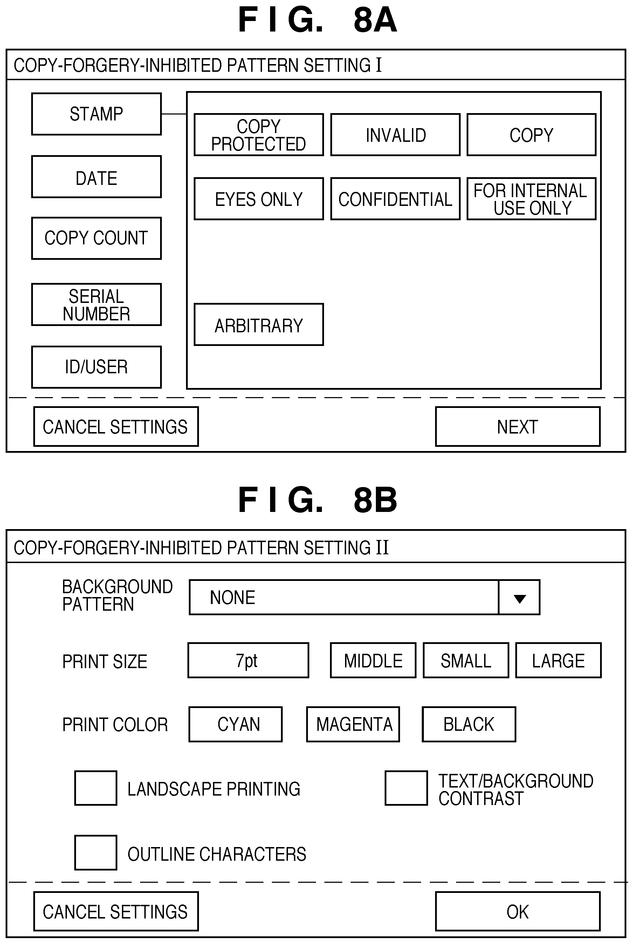

Fig. 2 is a block diagram for explaining the arrangement of the image processing unit 110 in the first embodiment of the present invention. An input print image is received via the network I/F 108 using a driver or the like on the host computer, or via the scanner I/F 109 using the scanner unit or the like. The RAM 103 holds the input print image. Based on an instruction set by the user using the display unit 105 and operation unit 106, a copy-forgery-inhibited-pattern printing determination unit 201 determines whether to perform copy-forgery-inhibited-pattern printing. Fig. 8A exemplifies a screen for designating, for example, the shape of a warning message such as "COPY PROTECTED" or "COPY" using the display unit 105 and operation unit 106. Fig. 8B exemplifies a screen for designating the print size, print color, and the like. Note that the screen for accepting an instruction from the user is not limited to them, and may include a component or function not shown here. Image data to be printed will be called a print image (or print image data), and an image to be printed as the background image of the print image will be called a copy-forgery-inhibited pattern image (or copy-forgery-inhibited pattern image data). An image generated by compositing the print image and copy-forgery-inhibited pattern image will be called a copy-forgery-inhibited pattern print image (or copy-forgery-inhibited pattern print image data).

A color conversion unit 202 converts a print image into data suited to the image processing apparatus. An applied amount calculation unit 203 calculates the amount of applied toner of the print image, and that of applied toner of a copy-forgery-inhibited pattern image designated via the display unit 105 or operation unit 106. A determination unit 204 calculates the amount of applied toner upon copy-forgery-inhibited-pattern composition, based on the amounts of applied toner of the print image and copy-forgery-inhibited pattern image that are calculated by the applied amount calculation unit 203. The determination unit 204 determines whether the calculated amount of applied toner exceeds the maximum amount of applied toner set in the image processing apparatus. An applied amount control unit 205 controls the amount of applied toner of the print image based on the amount of applied toner of the copy-forgery-inhibited pattern image that is calculated by the applied amount calculation unit 203. An image forming unit 206 performs halftoning for the print image. A composition unit 207 composites the print image and copy-forgery-inhibited pattern image. After that, the composition unit 207 sends and outputs the copy-forgery-inhibited pattern print image data to the image processing apparatus via the engine I/F 107.

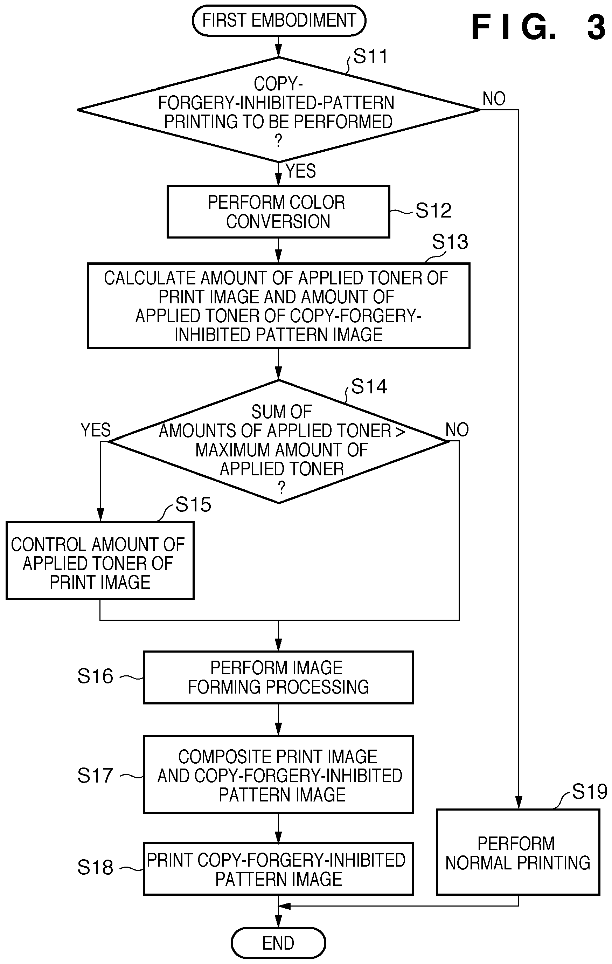

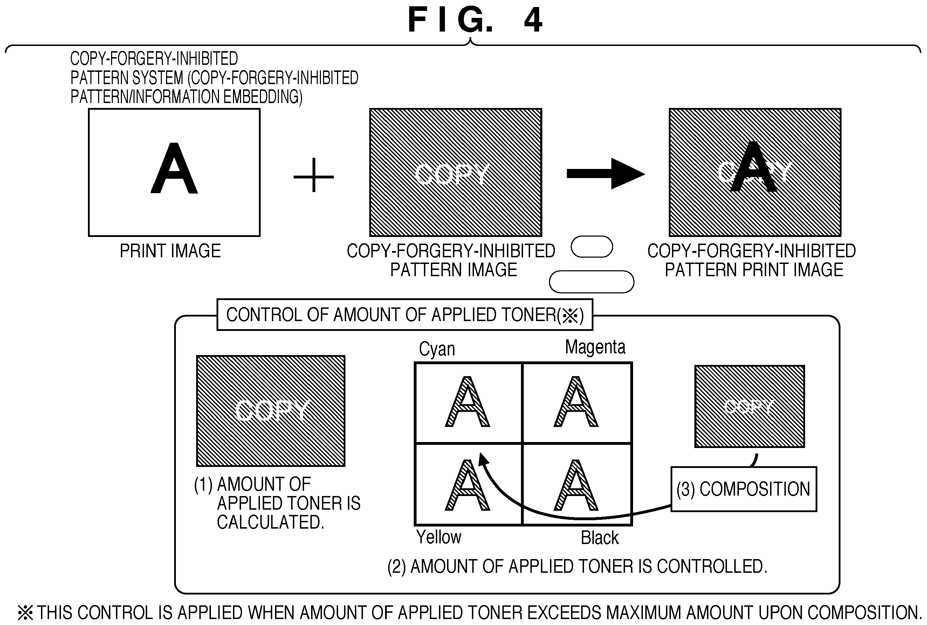

Fig. 3 is a flowchart of exemplary processing executed by the image processing apparatus in the first embodiment. Fig. 4 is a schematic view of the processing. In S11, by referring to copy-forgery-inhibited-pattern printing setting information, the copy-forgery-inhibited-pattern printing determination unit 201 determines whether to perform copy-forgery-inhibited-pattern printing for a print image received via the network I/F 108 or scanner I/F 109. If the copy-forgery-inhibited-pattern printing determination unit 201 determines to perform copy-forgery-inhibited-pattern printing (YES in S11), the process advances to S12. If the copy-forgery-inhibited-pattern printing determination unit 201 determines not to perform copy-forgery-inhibited-pattern printing (NO in S11), the process advances to S19, and the print image is normally output after undergoing color conversion processing and image forming processing without applying the present invention. The setting information used in this step is a set value input from the operation unit 106 using the display unit 105 in the image processing apparatus, or a set value input from a driver UI on the host computer. For example, as shown in Figs. 8A and 8B, print environment setting items in copy-forgery-inhibited pattern setting are prepared and allow the user to freely set the stamp type, print size, print color, and the like using the display unit 105 and operation unit 106 in the image processing apparatus, and the driver UI. As the instruction, a set value may always be held regardless of the execution timing, or interactively acquired when the user presses the print button. The RAM 103 in Fig. 1 holds a received image file.

In S12, the color conversion unit 202 converts the image data into data (for example, CMYK data) suitable for the image processing apparatus based on a color conversion table. The color conversion table is, for example, a 3D LUT (3D Look Up Table) that is a typical color conversion processing method. The color conversion table is a search table indicating a correspondence for converting RGB data into CMYK data, and is formed from $N \times N \times N$ matrix points. In principle, by setting the matrix interval sufficiently narrow, color conversion can be achieved with high precision. In practice, however, it is rare that a point subjected to color conversion matches a matrix point in terms of the memory capacity, processing speed, and the like. Thus, CMYK data is obtained by three-dimensional interpolation processing.

In S13, the applied amount calculation unit 203 calculates the amount of applied toner of the print image, and that of applied toner of a copy-forgery-inhibited pattern image designated via the display unit 105 or operation unit 106. In the calculation method for the print image, the amounts of applied toner corresponding to the signal values of respective colors (for example, C, M, Y, are K) of image data (print image or copy-forgery-inhibited pattern image) are stored in advance in the form of a 1D LUT (1D Look Up Table). In an actual operation, the amounts of applied toner of the respective colors of the image data are added while referring to the 1D LUT. A maximum value among all pixels is held as the amount of applied toner of print image data. When a copy-forgery-inhibited pattern image is added to only a partial region of the print image, calculation of the amount of applied toner of the print image is restricted to this region to obtain a maximum value, instead of obtaining a maximum value among all pixels. A limit value (maximum amount of applied toner) set in advance in the image processing apparatus may be set as the amount of applied toner of the print image.

For the copy-forgery-inhibited pattern image, the color which forms the image changes depending on the print color setting of the print environment setting item, and needs to be obtained while referring to the set value. In copy-forgery-inhibited-pattern printing, a part which appears upon copying is called a "latent image", and a part which disappears or fades upon copying is called a "background image". The amounts of applied toner of the latent image and background image are calculated, obtaining the amount of applied toner of the copy-forgery-inhibited pattern image. A practical method is as follows.

Letting H be the amount of applied toner of the copy-forgery-inhibited pattern image, H_sdot(sdot) be the amount of applied toner of the background image dot of the copy-forgery-inhibited pattern, and H_ldot(ldot) be the amount of applied toner of the latent image dot of the copy-forgery-inhibited pattern, H is calculated by

$$H = (H\_sdot(sdot) + H\_ldot(ldot))/2 \qquad ...(1)$$

The amount of applied toner of the background image dot of the copy-forgery-inhibited pattern, and that of applied toner of the latent image dot of the copy-forgery-inhibited pattern should originally become equal to each other by calibration or the like. However, the above calculation considers a case in which these amounts of applied toner are different due to instability of the image processing apparatus.

sdot and ldot are density value of background part and density value of latent image part, respectively, in copy-forgery-inhibited pattern image input from UI shown Fig. 8A. The applied amount H_sdot(sdot) of the background image dot of the copy-forgery-inhibited pattern, and the applied amount H_ldot(ldot) of the latent image dot of the copy-forgery-inhibited pattern are calculated using an LUT which is prepared in advance to convert a density value into the amount of applied toner. The LUT for use is prepared for each copy-forgery-inhibited pattern color, and an LUT needs to be selected in accordance with the copy-forgery-inhibited pattern color. When calculating the amount of applied toner of the copy-forgery-inhibited pattern image in accordance with the dot density, it may be weighted (by the ratio):

$$H = (H\_sdot(sdot)*ratio + H\_ldot(ldot)*ratio)/2$$

$$...(2)$$

In the first embodiment, the copy-forgery-inhibited pattern image is recorded in advance in the ROM 102. Thus, the amount of applied toner of the copy-forgery-inhibited pattern image may be calculated in advance for each set value (the print size and print color of copy-forgery-inhibited pattern input from UI shown Fig.8B) and held in the ROM 102.

In S14, the determination unit 204 calculates the amount of applied toner upon copy-forgery-inhibited-pattern composition, based on the amounts of applied toner of the print image and copy-forgery-inhibited pattern image that have been calculated by the applied amount calculation unit 203. That is, the amount of applied toner upon copy-forgery-inhibited-pattern composition is the sum of the amounts of applied toner of the print image and copy-forgery-inhibited pattern image. As described in S13, the amount of applied toner of the print image is a maximum value among the sum of the amounts of applied toner of the respective colors (C, M, Y, K) of each pixel of the print image in all pixels of the image data. Then, the determination unit 204 determines whether the sum of the amounts of applied toner of the print image and copy-forgery-inhibited pattern image exceeds the maximum amount of applied toner (limit value) set in the image processing apparatus. If the sum does not exceed the maximum amount of applied toner, the process advances to S16 without performing a process in S15. Note that the sum of the amount of applied toner of each pixel of the print image and the copy-forgery-inhibited pattern image is calculated, and each pixel can be determined whether to control the amount of applied toner to the print image according to the sum of the amount of applied toner of each pixel.

In S15, the applied amount control unit 205 reduces the amount of applied toner of the print image by the increase of the amount of applied toner of the copy-forgery-inhibited pattern image, based on the amount of applied toner of the copy-forgery-inhibited pattern image that has been calculated by the applied amount calculation unit 203. The increase of the amount of applied toner of the copy-forgery-inhibited pattern image is a value obtained by subtracting the maximum amount of applied toner from the sum of the amount of applied toner of the print image (a maximum value among the sum of the amounts of applied toner in all pixels of the image data) and the amount of applied toner of the copy-forgery-inhibited pattern image.

In copy-forgery-inhibited-pattern printing, the amount of applied toner is increased by printing a copy-forgery-inhibited pattern image. Thus, the amount of applied toner for printing a print image is decreased by that of applied toner necessary to print a copy-forgery-inhibited pattern image. When the copy-forgery-inhibited pattern image is formed in only a specific color (for example, cyan), the amount of applied toner may be decreased for only the color which forms the copy-forgery-inhibited pattern image, instead of decreasing the amount of applied toner for all the colors of the print image. When the copy-forgery-inhibited pattern image is added to only a partial region of the print image, the amount of applied toner of the print image is reduced in only this region. Although not described in detail, a variety of methods are available for processing of reducing the amount of applied toner. For example, the signal values of respective colors (for example, C, M, Y, and K) of image data (print image in this case) may be decreased uniformly, or UCR (Under Color Removal) processing may be executed to replace a predetermined number of CMY signals with K signals.

In S16, the image forming unit 206 executes halftoning for the print image and copy-forgery-inhibited pattern image. In S17, the composition unit 207 composites the print image and copy-forgery-inhibited pattern image. As the composition method, the print image is deleted for only a color (for example, cyan) which forms the copy-forgery-inhibited pattern image, in only a region where the copy-forgery-inhibited pattern image is added. Then, the copy-forgery-inhibited pattern image is added, generating a copy-forgery-inhibited pattern print image. In S18, the composition unit 207 sends and outputs, to the engine via the engine I/F 107, the copy-forgery-inhibited pattern print image created by the composition unit 207.

As described above, as an effect of the first embodiment, a fixing error generated when the amount of applied toner exceeds the maximum amount can be prevented in copy-forgery-inhibited-pattern printing. Only when the amount of applied toner exceeds the maximum amount, the applied amount is controlled. Even if the amount of applied toner of a print image is controlled, the amount of applied toner is compensated for by compositing a copy-forgery-inhibited pattern image. This can prevent degradation of the image quality of a printed material.

<Second Embodiment>

The first embodiment has described a composition method of, when the amount of applied toner necessary for copy-forgery-inhibited-pattern printing exceeds the maximum amount set in the image processing apparatus, calculating the value of the amount of applied toner of a copy-forgery-inhibited pattern image, and controlling the amount of applied toner of a print image based on the calculated value. As an application of the first embodiment, the second embodiment will explain a method of preventing degradation of the image quality of a printed material and preventing a decrease in performance by switching between the composition method of the first embodiment and a well-known composition method in accordance with the ratio at which a composite image such as a copy-forgery-inhibited pattern image or numbering image occupies a print image. An image to be printed will be called a print image, an image to be composited in the print image will be called a composite image (or composite image data), and an image generated by compositing the print image and composite image will be called a composite print image (or composite print image data). Assume that the composite image includes a copy-forgery-inhibited pattern image described in the first embodiment.

Fig. 5 is a block diagram for explaining the arrangement of an image processing unit 110 in the second embodiment of the present invention. An input print image is received via a network I/F 108 using a driver or the like on the host computer, or via a scanner I/F 109 using a scanner unit or the like. A RAM 103 holds the input print image. Based on an instruction set using a display unit 105 and operation unit 106, a composition printing determination unit 301 determines whether to perform composition printing. A color conversion unit 302 converts a print image into data suited to an image processing apparatus. A ratio calculation unit 303 calculates the ratio at which a composite image such as a copy-forgery-inhibited pattern image or numbering image occupies the size of the print image. The calculation method is arbitrary, and the ratio may be calculated based on, for example, the number of pixels. The ratio calculation unit 303 compares the calculated ratio with a preset threshold to determine whether the calculated ratio is greater than or equal to the threshold. If the ratio calculation unit 303 determines that the calculated ratio is lower than the threshold, a replace composition unit 304 performs halftoning for the print image and composite image, and executes replace composition. Thereafter, the replace composition unit 304 sends and outputs the resultant image to the image processing apparatus via an engine I/F 107. If the ratio calculation unit 303 determines that the calculated ratio is greater than or equal to the threshold, an applied amount control composition unit 305 controls and composites the amounts of applied toner of the print image and composite image. Applied amount control composition is the method described in the first embodiment. The internal arrangement of the applied amount control composition unit 305 includes the same processes as those of the applied amount calculation unit 203 to composition unit 207 in the first embodiment. The applied amount control composition unit 305 sends and outputs the resultant image to the image processing apparatus via the engine I/F 107.

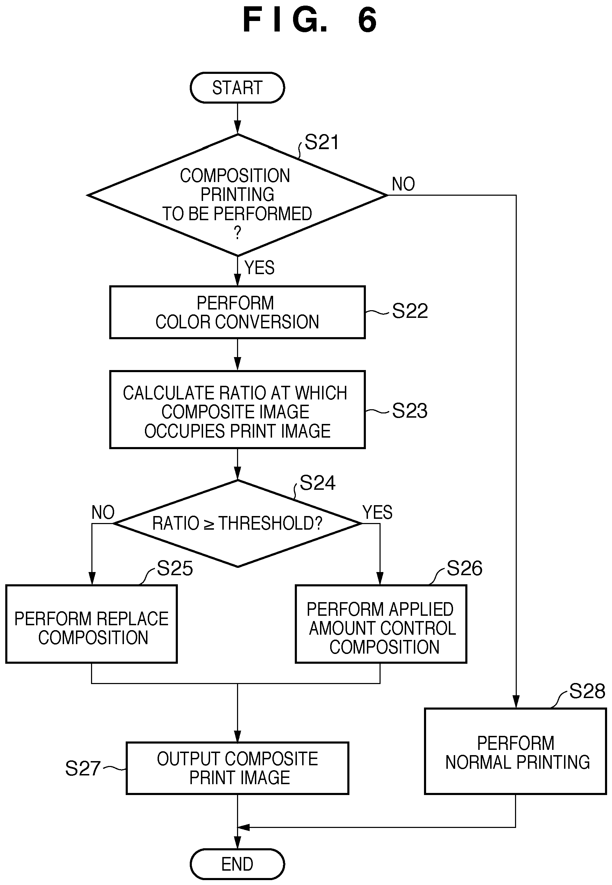

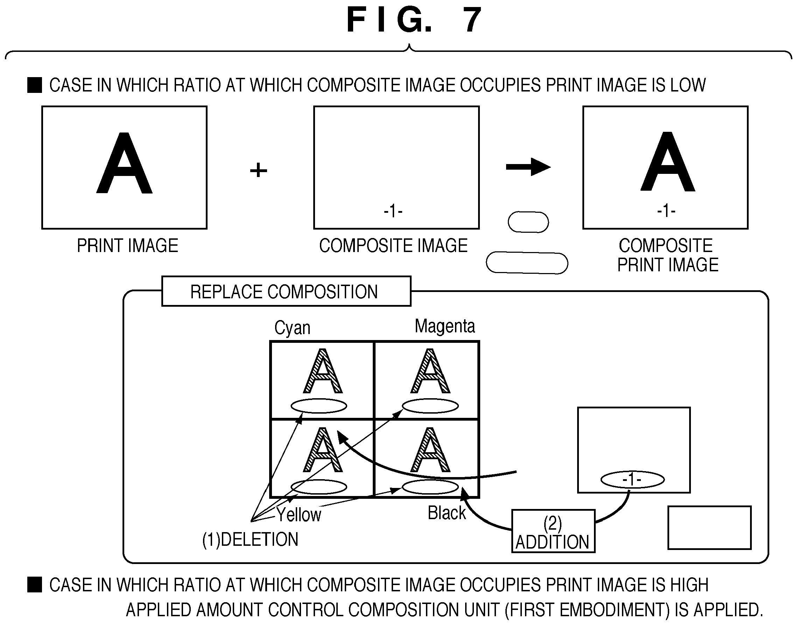

Fig. 6 is a flowchart of exemplary processing executed by the image processing apparatus in the second embodiment. Fig. 7 is a schematic view of the processing. In S21, by referring to composition printing setting information, the composition printing determination unit 301 determines whether to perform composition printing for a print image received via the network I/F 108 or scanner I/F 109. If the composition printing determination unit 301 determines not to perform composition printing (NO in S21), the process advances to S28, and the print image is output after undergoing color conversion processing and image forming processing without applying the present invention. The setting information used in this step is a set value input from the operation unit 106 using the display unit 105 in the image processing apparatus, or a set value input from a driver UI on the host computer. As the instruction, a set value may always be held regardless of the execution timing, or interactively acquired when the user presses the print button. The RAM 103 in Fig. 1 holds a received image file.

In S22, the color conversion unit 302 converts the image data into data (for example, CMYK data) suitable for the image processing apparatus based on a color conversion table. In S23, the ratio calculation unit 303 calculates the ratio at which the composite image occupies the print image. In S24, the ratio calculation unit 303 compares the calculated ratio with a preset threshold, and determines, based on the comparison result, whether the calculated ratio is greater than or equal to the threshold. The ratio at which the composite image occupies the print image may be calculated in advance in accordance with the type (copy-forgery-inhibited pattern, numbering, or information embedding) and setting of the composition method, and held in a ROM 102. Accordingly, a selection composition unit is implemented to select a composition unit to be applied to the image data. If the ratio calculation unit 303 determines in S24 that the calculated ratio is lower than the threshold, the replace composition unit 304 executes halftoning for the print image and composite image, and performs replace composition in S25. Assume that the replace composition method is a known method. In replace composition, all the colors (for example, C, M, Y, and K) of a print image are deleted and replaced with the colors (C, M, Y, K, R, G, and B) of a composite image in a region where the composite image is added. When composition is done by software processing without using hardware, the processing time may become long. However, the print image is replaced with the composite image, so whether the amount of applied toner exceeds the maximum amount need not be cared.

If the ratio calculation unit 303 determines in S24 that the calculated ratio is greater than or equal to the threshold, the applied amount control composition unit 305 performs applied amount control composition in S26. Applied amount control composition is the method described in the first embodiment. More specifically, the amounts of applied toner of a print image and composite image are calculated and added, calculating the amount of applied toner of the composite print image. Then, it is determined whether the calculated amount of applied toner exceeds the maximum amount of applied toner set in the image processing apparatus. If the calculated amount of applied toner exceeds the maximum amount, the amount of applied toner of the print image is reduced by the increase of the amount of applied toner of the composite image, based on the calculated amount of applied toner of the composite image. After that, halftoning is executed for the print image and composite image, compositing them. In applied amount control composition, a composite image is composited over a print image. Hence, even if a print image is generated not to exceed the maximum amount of applied toner, the amount of applied toner may exceed the maximum amount by the amount of applied toner of a composite image added later. In this case, the above-described processing is done to reduce the amount of applied toner of the print image. As for the processing time, for example, when the amount of applied toner is controlled by hardware, the processing time is considered to become shorter than that in replace composition. This is because it suffices to perform control of the amount of applied toner and composition only for a specific color which forms a composite image. In S27, the replace composition unit 304 or applied amount control composition unit 305 sends and outputs the composite print image created in S25 or S26 to the engine via the engine I/F 107.

As described above, in the second embodiment, replace composition is selected when the ratio at which the composite image occupies the print image is low (lower than the threshold), and applied amount control composition is selected when the ratio is high. This is because the applied amount is controlled in the entire region of the print image, and if the ratio at which the composite image occupies the print image is low, the amount of applied toner is not fully compensated for even after composition, and the image greatly degrades. In contrast, when the ratio at which the composite image occupies the print image is high (greater than or equal to the threshold), the amount of applied toner is compensated for by composition in a wide region, so image degradation hardly stands out. As for the performance, when the ratio at which the composite image occupies the print image is high, executing replace composition for all the colors (for example, C, M, Y, and K) of the print image may prolong the processing time. However, when the ratio at which the composite image occupies the print image is low, the processing time remains short even in replace composition. By switching the composition method depending on the ratio at which the composite image occupies the print image, a fixing error generated when the amount of applied toner exceeds the maximum amount can be prevented. In addition, degradation of the image quality of a printed material and a decrease in performance can be prevented.

<Third Embodiment>

In S15 of Fig. 3, the applied amount control unit 205 reduces the amount of applied toner of a print image by the increase of the amount of applied toner of a copy-forgery-inhibited pattern image, based on the amount of applied toner of the copy-forgery-inhibited pattern image that is calculated by the applied amount calculation unit 203. The increase of the amount of applied toner of the copy-forgery-inhibited pattern image is a value obtained by subtracting the maximum amount of applied toner from the sum of the amounts of applied toner of the print image and copy-forgery-inhibited pattern image.

The first and second embodiments have described a composition method of, when the amount of applied toner necessary for copy-forgery-inhibited-pattern printing exceeds the maximum amount set in the image processing apparatus, calculating the value of the amount of applied toner of a copy-forgery-inhibited pattern image, and controlling the amount of applied toner of a print image based on the calculated value. In the method described in the first and second embodiments, although the copy-forgery-inhibited pattern image is formed from only a specific color (for example, cyan) and added, all C, M, Y, and K colors are subtracted from the print image. This can prevent the amount of applied toner from exceeding the maximum amount upon composition. However, the color balance is lost, and the copy-forgery-inhibited pattern print image is output in color tint different from the original one of the print image. The third embodiment pays attention to this problem. When the copy-forgery-inhibited pattern image is formed from only a specific color (for example, cyan), $\gamma$ (gamma) correction processing is performed for only the specific color (for example, cyan) in the print image, and only the specific color after the gamma correction processing is subtracted from the print image. This can prevent color imbalance, and the copy-forgery-inhibited pattern print image can be output in almost the same color tint as that of the print image. However, only this processing cannot prevent the amount of applied toner from exceeding the maximum amount when the copy-forgery-inhibited pattern image is formed from, for example, only cyan and added, and the print image does not contain the amount of cyan which can compensate for the subtracted amount. In the third embodiment, therefore, the same processing as that in the first and second embodiments is executed after processing for a specific color. A detailed method will be described below.

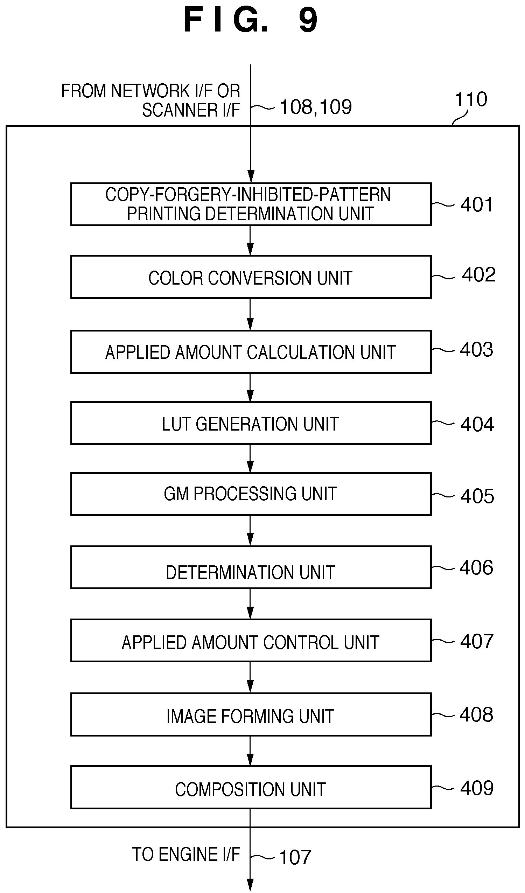

Fig. 9 is a block diagram for explaining the arrangement of an image processing unit 110 in the third embodiment of the present invention. An input print image is received via a network I/F 108 using a driver or the like on the host computer, or via a scanner I/F 109 using a scanner unit or the like. A RAM 103 holds the input print image.

Similar to the first embodiment, based on an instruction set by the user using a display unit 105 and operation unit 106, a copy-forgery-inhibited-pattern printing determination unit 401 determines whether to perform copy-forgery-inhibited-pattern printing. A color conversion unit 402 converts a print image into data suited to an image processing apparatus. An applied amount calculation unit 403 calculates the amount of applied toner of the print image, and that of applied toner of a copy-forgery-inhibited pattern image designated via the display unit 105 or operation unit 106. An LUT generation unit 404 generates an LUT for performing gamma correction processing based on the result of the applied amount calculation unit 403 for a specific color designated as the color of the copy-forgery-inhibited pattern image in copy-forgery-inhibited-pattern printing. A GM processing unit 405 executes gamma correction processing for the specific color of the print image, based on the LUT generated by the LUT generation unit 404. A determination unit 406 calculates the amount of applied toner upon copy-forgery-inhibited-pattern composition, based on the amount of applied toner of the print image having undergone gamma correction processing by the GM processing unit 405, and the amount of applied toner of the copy-forgery-inhibited pattern image that are calculated by the applied amount calculation unit 403. The determination unit 406 determines whether the calculated amount of applied toner exceeds the maximum amount of applied toner set in the image processing apparatus. An applied amount control unit 407 controls the amount of applied toner of the print image based on the value calculated by the applied amount calculation unit 403. An image forming unit 408 performs halftoning for the print image. A composition unit 409 composites the print image and copy-forgery-inhibited pattern image. Thereafter, the composition unit 409 sends and outputs the copy-forgery-inhibited pattern print image data to the image processing apparatus via an engine I/F 107.

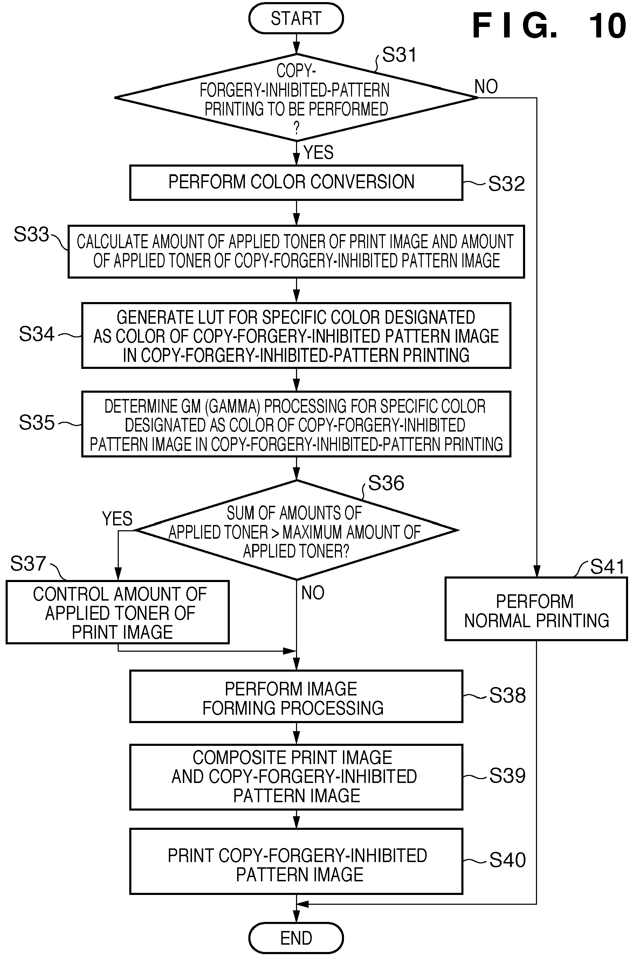

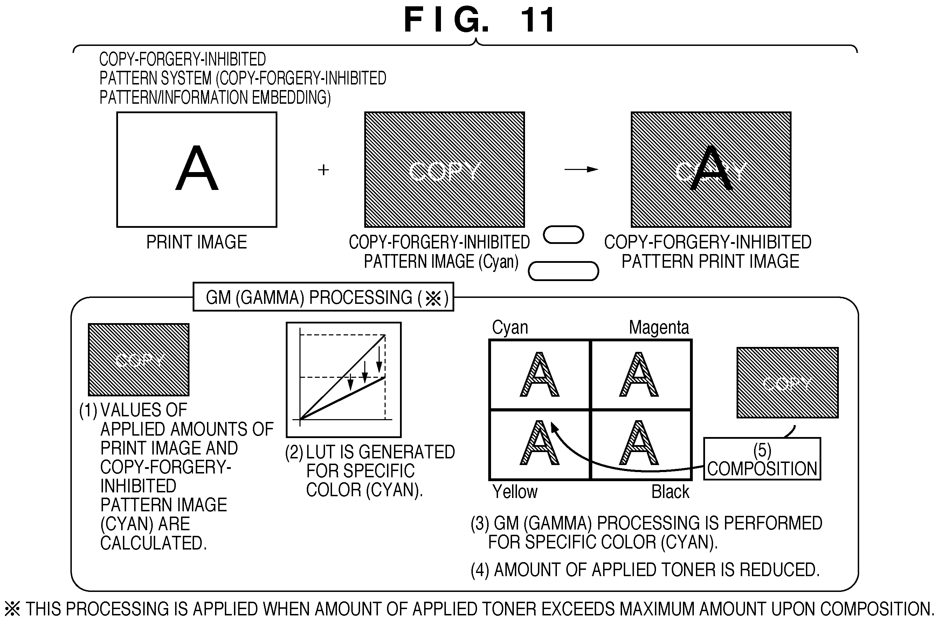

Fig. 10 is a flowchart of exemplary processing executed by the image processing apparatus in the third embodiment. Fig. 11 is a schematic view of the processing. S31 to S33, S36, and S38 to S41 are the same as S11 to S14, and S16 to S19 in the exemplary flowchart of the first embodiment shown in Fig. 3. Thus, only a difference will be explained.

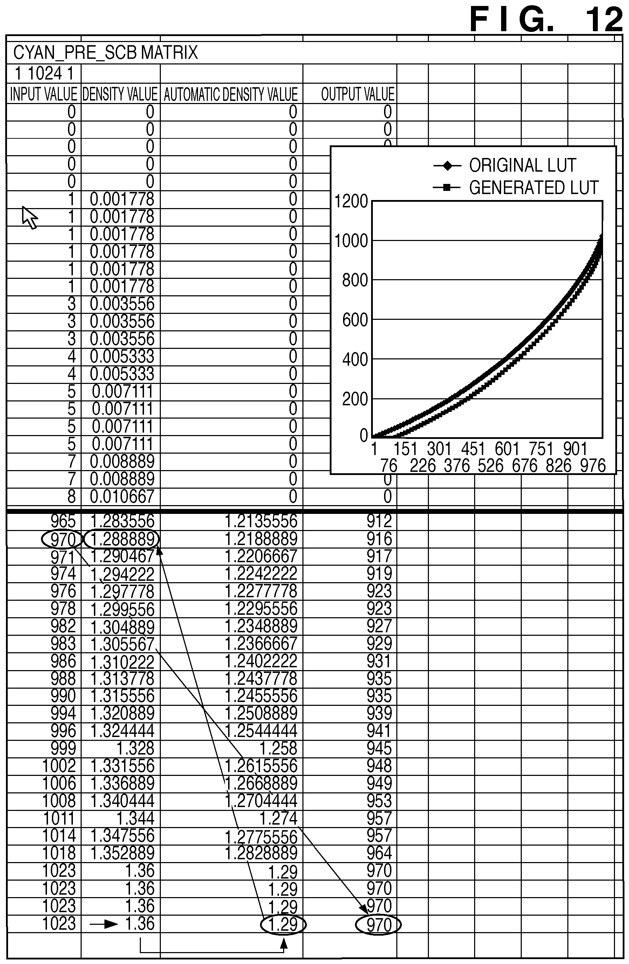

In S34, the LUT generation unit 404 generates an LUT for a specific color (cyan in the schematic view of Fig. 11) designated as the color of a copy-forgery-inhibited pattern image in copy-forgery-inhibited-pattern printing, based on the amount of applied toner of the copy-forgery-inhibited pattern image that is calculated by the applied amount calculation unit 403. The generated LUT is used to perform gamma correction processing for only the specific color of a print image so as to reduce the amount of applied toner by the increase of the amount of applied toner of the copy-forgery-inhibited pattern image. Note that the increase of the amount of applied toner of the copy-forgery-inhibited pattern image is the amount of applied toner of the copy-forgery-inhibited pattern image. The amount of applied toner is decreased uniformly even in an image region (density region) where the amount of applied toner does not exceed the maximum amount regardless of the copy-forgery-inhibited pattern image. In other words, the amount of applied toner is decreased uniformly by the amount of applied toner of the copy-forgery-inhibited pattern image in the entire image region for the specific color of the print image. A concrete LUT generation method will be explained with reference to Fig. 12.

First, the amount of applied toner of the copy-forgery-inhibited pattern image (cyan) that is calculated by the applied amount calculation unit 403 is converted into the density (the amount of applied toner is that of color material per unit area and thus can be converted into the density). Assume that the cyan density of the copy-forgery-inhibited pattern image is 0.07. Therefore, the LUT is generated to reduce the cyan color of the print image in the entire image uniformly by the increase "0.07" of the cyan density that is caused by the copy-forgery-inhibited pattern image. For example, when an input signal (10 bits) "1023" is sent to the image processing apparatus via the engine I/F 107, printing is done at the cyan density of 1.36 for the print image. To suppress the cyan density of the print image to 1.29 (signal value of 970) in advance, an LUT for converting the input value "1023" into an output value "970" is generated. When the cyan density of the print image is lower than 0.07 from the beginning, the density is converted into 0 (signal value is also 0). In this processing, the original density value PRINT_DEN of the print image, the target density value TARGET_DEN of the print image, the density value JIMON_DEN of the copy-forgery-inhibited pattern image, the input value INPUT of the LUT, and the output value OUTPUT of the LUT are defined as

$$TARGET\_DEN = PRINT\_DEN - JIMON\_DEN$$

$$OUTPUT = INPUT \text{ corresponding to } TARGET\_DEN$$

$$...(3)$$

Note that the LUT is arbitrarily a 1D or 3D LUT. The amount of applied toner may be reduced not using the LUT but using a conversion value based on simple offset calculation or the like.

In S35, the GM processing unit 405 performs gamma correction processing for the specific color designated in copy-forgery-inhibited-pattern printing of the print image by using the LUT generated by the LUT generation unit 404. In this way, the amount of applied toner of the print image is reduced in advance by the increase of the amount of applied toner of the specific color upon adding a copy-forgery-inhibited pattern image later. This can prevent a change in color tint upon copy-forgery-inhibited-pattern composition.

In S37, the applied amount control unit 407 further reduces the amount of applied toner of the print image in an image area where the amount of applied toner exceeds the maximum amount when the copy-forgery-inhibited pattern image is composited in the print image in which gamma correction processing has been done for the specific color in S35. The amount by which the amount of applied toner of the print image is reduced is a value obtained by subtracting the maximum amount of applied toner from the sum of the amount of applied toner of the print image having undergone gamma correction processing in S35, and that of applied toner of the copy-forgery-inhibited pattern image. In S35, gamma correction processing is executed for only the specific color of the print image. In an image region where the specific color is not contained in the first place, the amount of applied toner is not reduced and may exceed the maximum amount upon adding the copy-forgery-inhibited pattern image. To prevent this, the amount of applied toner of the print image needs to be further controlled. The amount of applied toner is reduced by the same method as that described in S15 of the first embodiment.

As described above, in the third embodiment, the print image undergoes gamma correction processing for only a specific color which forms a copy-forgery-inhibited pattern image. As a result, the amount of applied toner is reduced uniformly in the entire image region (density region). Then, the same processing as that in the first embodiment is performed. As an effect of the third embodiment, a fixing error generated when the amount of applied toner exceeds the maximum amount can be prevented in copy-forgery-inhibited-pattern printing. In addition, gamma correction processing is executed for the print image to uniformly decrease the signal value of the specific color in advance in the entire image region (density region). This can suppress an increase in the amount of applied toner caused by compositing a copy-forgery-inhibited pattern image, and prevent a change in color tint upon adding the copy-forgery-inhibited pattern.

Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments.

**Claims**

1. An image processing apparatus (110) which generates copy-forgery-inhibited pattern print image data by compositing print image data and copy-forgery-inhibited pattern image data, the apparatus comprising:

   an applied amount calculation means (203; 403) which calculates an amount of applied toner of the print image data and an amount of applied toner of the copy-forgery-inhibited pattern image data,
   **characterized by**:

   a determination means (204; 406) which determines, based on the amounts of applied toner calculated by said applied amount calculation means (203; 403), whether the sum of the amounts of applied toner of the print image data and the copy-forgery-inhibited image exceeds a predetermined amount of applied toner; an applied amount control means (205; 407) which, in a case where said determination means (204; 406) determines that the sum of the amounts of applied toner exceeds the predetermined amount of applied toner, restricts the amount of applied toner of the print image data to prevent the sum of the amounts of applied toner from exceeding the predetermined amount of applied toner, wherein in a case where the sum of the amounts of applied toner does not exceed the predetermined amount of applied toner, the amount of applied toner of the print image data is not restricted by said applied amount control means (205; 407); and

a composition means (207; 409) which composites the print image data whose amount of applied toner is restricted by said applied amount control means (205; 407) in a case where the sum of the amounts of applied toner exceeds the predetermined amount of applied toner, and the copy-forgery-inhibited pattern image data, and composites the print image data whose amount of applied toner is not restricted in a case where the sum of the amounts of applied toner does not exceed the predetermined amount of applied toner, and the copy-forgery-inhibited pattern image data, to generate the copy-forgery-inhibited pattern print image data.

2. The apparatus according to claim 1, wherein said applied amount control means (205) reduces the amount of applied toner of the print image data by an amount by which the sum of the amounts of applied toner exceeds the predetermined amount of applied toner.

3. The apparatus according to claim 1, wherein the applied amount calculation means (203) calculates the sum of the amounts of applied toner of respective CMYK color components of each pixel of the print image, and sets a maximum value among the sum of the amounts of the applied toner as the amount of applied toner of the print image data.

4. The apparatus according to claim 1, wherein the applied amount calculation means (203) calculates the amount of the applied toner of the copy-forgery-inhibited pattern image data by using a density value and color of a latent image part and a background part in the copy-forgery-inhibited pattern image input from an operation means.

5. The apparatus according to claim 1, wherein said applied amount control means (205) controls the amount of applied toner of the print image data for a specific color which forms the copy-forgery-inhibited pattern image data.

6. The apparatus according to claim 1, wherein said applied amount calculation means (203) calculates the amount of applied toner of the print image data in a region where the copy-forgery-inhibited pattern image data is added, and said applied amount control means (205) controls the amount of applied toner of the print image data in the region where the copy-forgery-inhibited pattern image data is added.

7. The apparatus according to claim 1, further comprising:

a generation means (404) which generates a conversion value used to perform gamma correction processing, based on the amounts of applied toner of the copy-forgery-inhibited patter image data calculated by said applied amount calculation means (203), for a specific color designated as a color of a copy-forgery-inhibited pattern image in copy-forgery-inhibited-pattern printing; and
a processing means (405) which performs the gamma correction processing for the specific color of the print image data using the conversion value generated by said generation means (404),
wherein said determination means (204) determines whether the sum of the amounts of applied toner exceeds the predetermined amount of applied toner in a case where the print image data having undergone the gamma correction processing by said processing means (405), and the copy-forgery-inhibited pattern image data are composited, and
in a case where the sum of the amounts of applied toner is determined to exceed the predetermined amount of applied toner, said applied amount control means (205) restricts the amount of applied toner of the print image data having undergone the gamma correction processing for the specific color to prevent the amount of applied toner after composition from exceeding the predetermined amount of applied toner.

8. The apparatus of claim 1, further comprising:

a ratio calculation means (303) which calculates a ratio at which the copy-forgery-inhibited pattern image data occupies the print image data;
a comparison means (303) which compares, with a threshold, the ratio at which the copy-forgery-inhibited pattern image data occupies the print image data and which is calculated by said ratio calculation means (303); and
an applied amount control composition means (305) which is executed in a case where the ratio at which the copy-forgery-inhibited pattern image data occupies the print image data is not lower than the threshold as a result of comparison by said comparison means (303),
said applied amount control composition means (305) including:

the applied amount calculation means (403) which calculates the amount of applied toner of the print image data and the amount of applied toner of the copy-forgery-inhibited pattern image data;

the determination means (406) which determines, based on the amounts of applied toner calculated by said applied amount calculation means (403), whether the sum of the amounts of applied toner exceeds the predetermined amount of applied toner in a case where the print image data and the copy-forgery-inhibited pattern image data are composited;

the applied amount control means (407) which, in a case where said determination means (406) determines that the sum of the amounts of applied toner exceeds the predetermined amount of applied toner, restricts the amount of applied toner of the print image data to prevent the amount of applied toner after composition from exceeding the predetermined amount of applied toner; and

the composition means (409) which composites the print image data and the copy-forgery-inhibited pattern image data, generating the copy-forgery-inhibited pattern print image data.

9. The apparatus according to claim 8, wherein in a case where the ratio at which the copy-forgery-inhibited pattern image data occupies the print image data is lower than the threshold as a result of comparison by said comparison means (303), a replace composition means (304) is applied to delete a color information of the print image data and replace the print image data with the copy-forgery-inhibited pattern image data in a region where the copy-forgery-inhibited pattern image data is added.

10. An image processing method of generating copy-forgery-inhibited pattern print image data by compositing print image data and copy-forgery-inhibited pattern image data, the method comprising:

an applied amount calculation step (S13) of calculating an amount of applied toner of the print image data and an amount of applied toner of the copy-forgery-inhibited pattern image data,
**characterized by**:

a determination step (S14) of determining, based on the amounts of applied toner calculated in the applied amount calculation step, whether the sum of the amounts of applied toner of the print image data and the copy-forgery-inhibited image exceeds a predetermined amount of applied toner;

an applied amount control step (S15) of, in a case where the sum of the amounts of applied toner is determined in the determination step to exceed the predetermined amount of applied toner, restricting the amount of applied toner of the print image data to prevent the sum of the amounts of applied toner from exceeding the predetermined amount of applied toner, wherein in a case where the sum of the amounts of applied toner is determined to not exceed the predetermined amount of applied toner, the amount of applied toner of the print image data is not restricted in the applied amount control step (S15); and

a composition step (S17) of compositing the print image data whose amount of applied toner is restricted in the applied amount control step in a case where the sum of the amounts of applied toner is determined to exceed the predetermined amount of applied toner, and the copy-forgery-inhibited pattern image data, and compositing the print image data whose amount of applied toner is not restricted in a case where the sum of the amounts of applied toner is determined to not exceed the predetermined amount of applied toner, and the copy-forgery-inhibited pattern image data, to generate the copy-forgery-inhibited pattern print image data.

11. The image processing method of claim 10, further comprising:

a ratio calculation step (S23) of calculating a ratio at which the copy-forgery-inhibited pattern image data occupies the print image data;

a comparison step (S24) of comparing, with a threshold, the ratio at which the copy-forgery-inhibited pattern image data occupies the print image data and which is calculated in said ratio calculation step; and

an applied amount control composition step (S26) which is executed in a case where the ratio at which the copy-forgery-inhibited pattern image data occupies the print image data is not lower than the threshold as a result of comparison in said comparison step,
said applied amount control composition step (S26) including:

the applied amount calculation step (S13) of calculating the amount of applied toner of the print image data and an amount of applied toner of the copy-forgery-inhibited pattern image data;

the determination step (S14) of determining, based on the amounts of applied toner calculated in said applied amount calculation step, whether the sum of the amounts of applied toner exceeds the predetermined amount of applied toner in a case where the print image data and the copy-forgery-inhibited pattern image data are composited;

the applied amount control step (S15) of, in a case where the sum of the amounts of applied toner is determined in said determination step to exceed the predetermined amount of applied toner, restricting the amount of applied toner of the print image data to prevent the amount of applied toner after composition from exceeding the predetermined amount of applied toner; and

the composition step (S17) of compositing the print image data whose amount of applied toner is restricted in said applied amount control step, and the copy-forgery-inhibited pattern image data, generating the copy-forgery-inhibited pattern print image data.

12. A computer-readable medium storing a program for causing a computer to carry out the steps of the method of claim 10 or 11 when the program is run on the computer.

**Patentansprüche**

1. Bildverarbeitungsvorrichtung (110), die Kopiefälschungsverhinderungsmusterdruckbilddaten durch Zusammensetzen von Druckbilddaten und Kopiefälschungsverhinderungsmusterbilddaten erzeugt, mit

einer Aufwendungsmengenberechnungseinrichtung (203; 403), die eine Menge an aufgewandtem Toner der Druckbilddaten und eine Menge an aufgewandtem Toner der Kopiefälschungsverhinderungsmusterbilddaten berechnet,

**gekennzeichnet durch**

eine Bestimmungseinrichtung (204; 406), die beruhend auf den durch die Aufwendungsmengenberechnungseinrichtung (203; 403) berechneten Mengen an aufgewandtem Toner bestimmt, ob die Summe der Mengen an aufgewandtem Toner der Druckbilddaten und des Kopiefälschungsverhinderungsbildes eine vorbestimmte Menge an aufgewandtem Toner überschreitet,

eine Aufwendungsmengensteuereinrichtung (205; 407), die in einem Fall, in dem die Bestimmungseinrichtung (204; 406) bestimmt, dass die Summe der Mengen an aufgewandtem Toner die vorbestimmte Menge an aufgewandtem Toner überschreitet, die Menge an aufgewandtem Toner der Druckbilddaten beschränkt, um zu verhindern, dass die Summe der Mengen an aufgewandtem Toner die vorbestimmte Menge an aufgewandtem Toner überschreitet, wobei in einem Fall, in dem die Summe der Mengen an aufgewandtem Toner die vorbestimmte Menge an aufgewandtem Toner nicht überschreitet, die Menge an aufgewandtem Toner der Druckbilddaten durch die Aufwendungsmengensteuereinrichtung (205; 407) nicht beschränkt wird, und

eine Zusammensetzungseinrichtung (207; 409), die die Druckbilddaten, deren Menge an aufgewandtem Toner durch die Aufwendungsmengensteuereinrichtung (205; 407) in einem Fall beschränkt ist, in dem die Summe der Mengen an aufgewandtem Toner die vorbestimmte Menge an aufgewandtem Toner überschreitet, und die Kopiefälschungsverhinderungsmusterbilddaten zusammensetzt, und die Druckbilddaten, deren Menge an aufgewandtem Toner in einem Fall nicht beschränkt ist, in dem die Summe der Mengen an aufgewandtem Toner die vorbestimmte Menge an aufgewandtem Toner nicht überschreitet, und die Kopiefälschungsverhinderungsmusterbilddaten zusammensetzt, um die Kopiefälschungsverhinderungsmusterdruckbilddaten zu erzeugen.

2. Vorrichtung nach Anspruch 1, wobei die Aufwendungsmengensteuereinrichtung (205) die Menge an aufgewandtem Toner der Druckbilddaten um eine Menge verringert, um die die Summe der Mengen an aufgewandtem Toner die vorbestimmte Menge an aufgewandtem Toner überschreitet.

3. Vorrichtung nach Anspruch 1, wobei die Aufwendungsmengenberechnungseinrichtung (203) die Summe der Mengen an aufgewandtem Toner jeweiliger CMYK-Farbkomponenten jedes Bildelements des Druckbildes berechnet und einen maximalen Wert unter der Summe der Mengen des aufgewandten Toners als die Menge von aufgewandtem Toner der Druckbilddaten einstellt.

4. Vorrichtung nach Anspruch 1, wobei die Aufwendungsmengenberechnungseinrichtung (203) die Menge des aufgewandten Toners der Kopiefälschungsverhinderungsmusterbilddaten unter Verwendung eines Dichtewerts und einer Farbe eines Latentbildabschnitts und eines Hintergrundabschnitts in dem von einer Bedieneinrichtung eingegebenen Kopiefälschungsverhinderungsmusterbild berechnet.

5. Vorrichtung nach Anspruch 1, wobei die Aufwendungsmengensteuereinrichtung (205) die Menge an aufgewandtem Toner der Druckbilddaten für eine bestimmte Farbe steuert, die die Kopiefälschungsverhinderungsmusterbilddaten bildet.

**6.** Vorrichtung nach Anspruch 1, wobei die Aufwendungsmengenberechnungseinrichtung (203) die Menge an aufgewandtem Toner der Druckbilddaten in einer Region berechnet, in der die Kopiefälschungsverhinderungsmusterbilddaten addiert sind, und
die Aufwendungsmengensteuereinrichtung (205) die Menge an aufgewandtem Toner der Druckbilddaten in der Region steuert, in der die Kopiefälschungsverhinderungsmusterbilddaten addiert sind.

**7.** Vorrichtung nach Anspruch 1, ferner mit

einer Erzeugungseinrichtung (404), die beruhend auf den durch die Aufwendungsmengenberechnungseinrichtung (203) berechneten Mengen an aufgewandtem Toner der Kopiefälschungsverhinderungsmusterbilddaten einen Umwandlungswert erzeugt, der zur Durchführung einer Gammakorrekturverarbeitung für eine bestimmte Farbe verwendet wird, die bei einem Kopiefälschungsverhinderungsmusterdrucken als Farbe eines Kopiefälschungsverhinderungsmusterbildes festgelegt wird, und
einer Verarbeitungseinrichtung (405), die die Gammakorrekturverarbeitung für die bestimmte Farbe der Druckbilddaten unter Verwendung des durch die Erzeugungseinrichtung (404) erzeugten Umwandlungswerts durchführt,
wobei die Bestimmungseinrichtung (204) in einem Fall, in dem die Druckbilddaten, die der Gammakorrekturverarbeitung durch die Verarbeitungseinrichtung (405) unterzogen wurden, und die Kopiefälschungsverhinderungsmusterbilddaten zusammengesetzt werden, bestimmt, ob die Summe der Mengen an aufgewandtem Toner die vorbestimmte Menge an aufgewandtem Toner überschreitet, und
in einem Fall, in dem bestimmt wird, dass die Summe der Mengen an aufgewandtem Toner die vorbestimmte Menge an aufgewandtem Toner überschreitet, die Aufwendungsmengensteuereinrichtung (205) die Menge an aufgewandtem Toner der Druckbilddaten, die der Gammakorrekturverarbeitung für die bestimmte Farbe unterzogen wurden, beschränkt, um zu verhindern, dass die Menge an aufgewandtem Toner nach der Zusammensetzung die vorbestimmte Menge an aufgewandtem Toner überschreitet.

**8.** Vorrichtung nach Anspruch 1, ferner mit

einer Verhältnisberechnungseinrichtung (303), die ein Verhältnis berechnet, mit dem die Kopiefälschungsverhinderungsmusterbilddaten die Druckbilddaten belegen,
einer Vergleichseinrichtung (303), die das durch die Verhältnisberechnungseinrichtung (303) berechnete Verhältnis, mit dem die Kopiefälschungsverhinderungsmusterbilddaten die Druckbilddaten belegen, mit einem Schwellenwert vergleicht, und
einem Aufwendungsmengensteuerzusammensetzungsmittel (305), das in einem Fall ausgeführt wird, in dem als Ergebnis des Vergleichs durch die Vergleichseinrichtung (303) das Verhältnis, mit dem die Kopiefälschungsverhinderungsmusterbilddaten die Druckbilddaten belegen, nicht kleiner als der Schwellenwert ist,
wobei die Aufwendungsmengensteuerzusammensetzungseinrichtung (305) umfasst
die Aufwendungsmengenberechnungseinrichtung (403), die die Menge an aufgewandtem Toner der Druckbilddaten und die Menge an aufgewandtem Toner der Kopiefälschungsverhinderungsmusterbilddaten berechnet,
die Bestimmungseinrichtung (406), die in einem Fall, in dem die Druckbilddaten und Kopiefälschungsverhinderungsmusterbilddaten zusammengesetzt werden, beruhend auf den durch die Aufwendungsmengenberechnungseinrichtung (403) berechneten Mengen an aufgewandtem Toner bestimmt, ob die Summe der Mengen an aufgewandtem Toner die vorbestimmte Menge an aufgewandtem Toner überschreitet,
die Aufwendungsmengensteuereinrichtung (407), die in einem Fall, in dem die Bestimmungseinrichtung (406) bestimmt, dass die Summe der Mengen an aufgewandtem Toner die vorbestimmte Menge an aufgewandtem Toner überschreitet, die Menge an aufgewandtem Toner der Druckbilddaten beschränkt, um zu verhindern, dass die Menge an aufgewandtem Toner nach der Zusammensetzung die vorbestimmte Menge an aufgewandtem Toner überschreitet, und
die Zusammensetzungseinrichtung (409), die die Druckbilddaten und die Kopiefälschungsverhinderungsmusterbilddaten zusammensetzt, wodurch die Kopiefälschungsverhinderungsmusterdruckbilddaten erzeugt werden.

**9.** Vorrichtung nach Anspruch 8, wobei in einem Fall, in dem als Ergebnis des Vergleichs durch die Vergleichseinrichtung (303) das Verhältnis, mit dem die Kopiefälschungsverhinderungsmusterbilddaten die Druckbilddaten belegen, geringer als der Schwellenwert ist, ein Ersetzungszusammensetzungsmittel (305) zum Löschen einer Farbinformation der Druckbilddaten und Ersetzen der Druckbilddaten durch die Kopiefälschungsverhinderungsmusterbilddaten in einer Region angewendet wird, in der die Kopiefälschungsverhinderungsmusterbilddaten addiert sind.

10. Bildverarbeitungsverfahren eines Erzeugens von Kopiefälschungsverhinderungsmusterdruckbilddaten durch Zusammensetzen von Druckbilddaten und Kopiefälschungsverhinderungsmusterbilddaten, mit

einem Aufwendungsmengenberechnungsschritt (S13) eines Berechnens einer Menge an aufgewandtem Toner der Druckbilddaten und einer Menge an aufgewandtem Toner der Kopiefälschungsverhinderungsmusterbilddaten,

**gekennzeichnet durch**

einen Bestimmungsschritt (S14) eines Bestimmens beruhend auf den in dem Aufwendungsmengenberechnungsschritt berechneten Mengen an aufgewandtem Toner, ob die Summe der Mengen an aufgewandtem Toner der Druckbilddaten und des Kopiefälschungsverhinderungsbildes eine vorbestimmte Menge an aufgewandtem Toner überschreitet,

einen Aufwendungsmengensteuerschritt (S15) eines Beschränkens der Menge an aufgewandtem Toner der Druckbilddaten in einem Fall, in dem in dem Bestimmungsschritt bestimmt wird, dass die Summe der Mengen an aufgewandtem Toner die vorbestimmte Menge an aufgewandtem Toner überschreitet, um zu verhindern, dass die Summe der Mengen an aufgewandtem Toner die vorbestimmte Menge an aufgewandtem Toner überschreitet, wobei in einem Fall, in dem bestimmt wird, dass die Summe der Mengen an aufgewandtem Toner die vorbestimmte Menge an aufgewandtem Toner nicht überschreitet, die Menge an aufgewandtem Toner der Druckbilddaten in dem Aufwendungsmengensteuerschritt (S15) nicht beschränkt wird, und

einen Zusammensetzungsschritt (S17) eines Zusammensetzens der Druckbilddaten, deren Menge an aufgewandtem Toner in dem Aufwendungsmengensteuerschritt in einem Fall beschränkt wird, in dem bestimmt wird, dass die Summe der Mengen an aufgewandtem Toner die vorbestimmte Menge an aufgewandtem Toner überschreitet, und der Kopiefälschungsverhinderungsmusterbilddaten und eines Zusammensetzens der Druckbilddaten, deren Menge an aufgewandtem Toner in einem Fall nicht beschränkt wird, in dem bestimmt wird, dass die Summe der Mengen an aufgewandtem Toner die vorbestimmte Menge an aufgewandtem Toner nicht überschreitet, und der Kopiefälschungsverhinderungsmusterbilddaten, um die Kopiefälschungsverhinderungsmusterdruckbilddaten zu erzeugen.

11. Bildverarbeitungsverfahren nach Anspruch 10, ferner mit

einem Verhältnisberechnungsschritt (S23) eines Berechnens eines Verhältnisses, mit dem die Kopiefälschungsverhinderungsmusterbilddaten die Druckbilddaten belegen,

einem Vergleichsschritt (S24) eines Vergleichens des in dem Verhältnisberechnungsschritt berechneten Verhältnisses, mit dem die Kopiefälschungsverhinderungsmusterbilddaten die Druckbilddaten belegen, mit einem Schwellenwert, und

einem Aufwendungsmengensteuerzusammensetzungsschritt (S26), der in einem Fall ausgeführt wird, in dem als Ergebnis des Vergleichs im Vergleichsschritt das Verhältnis, mit dem die Kopiefälschungsverhinderungsmusterbilddaten die Druckbilddaten belegen, nicht kleiner als der Schwellenwert ist,

wobei der Aufwendungsmengensteuerzusammensetzungsschritt (S26) umfasst

den Aufwendungsmengenberechnungsschritt (S13) des Berechnens der Menge an aufgewandtem Toner der Druckbilddaten und einer Menge an aufgewandtem Toner der Kopiefälschungsverhinderungsmusterbilddaten,

den Bestimmungsschritt (S14) des Bestimmens beruhend auf den im Aufwendungsmengenberechnungsschritt berechneten Mengen an aufgewandtem Toner, ob die Summe der Mengen an aufgewandtem Toner die vorbestimmte Menge an aufgewandtem Toner überschreitet, in einem Fall, in dem die Druckbilddaten und die Kopiefälschungsverhinderungsmusterbilddaten zusammengesetzt werden,

den Aufwendungsmengensteuerschritt (S15) des Beschränkens der Menge an aufgewandtem Toner der Druckbilddaten in einem Fall, in dem in dem Bestimmungsschritt bestimmt wird, dass die Summe der Mengen an aufgewandtem Toner die vorbestimmte Menge an aufgewandtem Toner überschreitet, um zu verhindern, dass die Menge an aufgewandtem Toner nach Zusammensetzung die vorbestimmte Menge an aufgewandtem Toner überschreitet, und

den Zusammensetzungsschritt (S17) des Zusammensetzens der Druckbilddaten, deren Menge an aufgewandtem Toner in dem Aufwendungsmengensteuerschritt beschränkt wird, und der Kopiefälschungsverhinderungsmusterbilddaten, um die Kopiefälschungsverhinderungsmusterdruckbilddaten zu erzeugen.

12. Computerlesbares Medium, das ein Programm zur Veranlassung eines Computers zur Ausführung der Schritte des Verfahrens nach Anspruch 10 oder 11 speichert, wenn das Programm auf dem Computer abläuft.

**Revendications**

1. Appareil de traitement d'image (110) qui génère des données d'image d'impression de motif d'inhibition de copie-falsification par composition de données d'image d'impression et de données d'image de motif d'inhibition de copie-falsification, l'appareil comprenant :

   un moyen de calcul de quantité appliquée (203 ; 403) qui calcule une quantité de toner appliqué des données d'image d'impression et une quantité de toner appliqué des données d'image de motif d'inhibition de copie-falsification,

   **caractérisé par** :

   un moyen de détermination (204 ; 406) qui détermine, sur la base des quantités de toner appliqué calculées par ledit moyen de calcul de quantité appliquée (203 ; 403), si la somme des quantités de toner appliqué des données d'image d'impression et des données d'image d'inhibition de copie-falsification dépasse une quantité prédéterminée de toner appliqué ;
   un moyen de commande de quantité appliquée (205 ; 407) qui, dans un cas où ledit moyen de détermination (204 ; 406) détermine que la somme des quantités de toner appliqué dépasse la quantité prédéterminée de toner appliqué, limite la quantité de toner appliqué des données d'image d'impression afin d'éviter que la somme des quantités de toner appliqué ne dépasse la quantité prédéterminée de toner appliqué, dans lequel, dans un cas où la somme des quantités de toner appliqué ne dépasse pas la quantité prédéterminée de toner appliqué, la quantité de toner appliqué des données d'image d'impression n'est pas limitée par ledit moyen de commande de quantité appliquée (205 ; 407) ; et
   un moyen de composition (207 ; 409) qui effectue une composition des données d'image d'impression dont la quantité de toner appliqué est limitée par ledit moyen de commande de quantité appliquée (205 ; 407) dans un cas où la somme des quantités de toner appliqué dépasse la quantité prédéterminée de toner appliqué, et des données d'image de motif d'inhibition de copie-falsification, et effectue une composition des données d'image d'impression dont la quantité de toner appliqué n'est pas limitée dans un cas où la somme des quantités de toner appliqué ne dépasse pas la quantité prédéterminée de toner appliqué, et des données d'image de motif d'inhibition de copie-falsification, pour générer les données d'image d'impression de motif d'inhibition de copie-falsification.

2. Appareil selon la revendication 1, dans lequel ledit moyen de commande de quantité appliquée (205) réduit la quantité de toner appliqué des données d'image d'impression d'une quantité dont la somme des quantités de toner appliqué dépasse la quantité prédéterminée de toner appliqué.

3. Appareil selon la revendication 1, dans lequel le moyen de calcul de quantité appliquée (203) calcule la somme des quantités de toner appliqué de composantes de couleurs CMYK respectives de chaque pixel de l'image d'impression, et règle une valeur maximale au sein de la somme des quantités du toner appliqué en tant que quantité de toner appliqué des données d'image d'impression.

4. Appareil selon la revendication 1, dans lequel le moyen de calcul de quantité appliquée (203) calcule la quantité du toner appliqué des données d'image de motif d'inhibition de copie-falsification en utilisant une valeur de densité et une couleur d'une partie d'image latente et d'une partie d'arrière-plan dans l'image de motif d'inhibition de copie-falsification fournie en entrée par un moyen d'exploitation.

5. Appareil selon la revendication 1, dans lequel ledit moyen de commande de quantité appliquée (205) commande la quantité de toner appliqué des données d'image d'impression pour une couleur particulière qui forme les données d'image de motif d'inhibition de copie-falsification.

6. Appareil selon la revendication 1, dans lequel ledit moyen de calcul de quantité appliquée (203) calcule la quantité de toner appliqué des données d'image d'impression dans une région dans laquelle les données d'image de motif d'inhibition de copie-falsification sont ajoutées, et
   ledit moyen de commande de quantité appliquée (205) commande la quantité de toner appliqué des données d'image d'impression dans la région dans laquelle les données d'image de motif d'inhibition de copie-falsification sont ajoutées.

7. Appareil selon la revendication 1, comprenant en outre :

un moyen de génération (404) qui génère une valeur de conversion utilisée pour effectuer un traitement de correction du gamma, sur la base des quantités de toner appliqué des données d'image de motif d'inhibition de copie-falsification calculées par ledit moyen de calcul de quantité appliquée (203), pour une couleur particulière désignée comme étant une couleur d'une image de motif d'inhibition de copie-falsification lors de l'impression d'un motif d'inhibition de copie-falsification ; et

un moyen de traitement (405) qui effectue le traitement de correction du gamma pour la couleur particulière des données d'image d'impression en utilisant la valeur de conversion générée par ledit moyen de génération (404),

dans lequel ledit moyen de détermination (204) détermine si la somme des quantités de toner appliqué dépasse la quantité prédéterminée de toner appliqué dans un cas où les données d'image d'impression ayant été soumises au traitement de correction du gamma par ledit moyen de traitement (405), et les données d'image de motif d'inhibition de copie-falsification sont soumises à une composition, et

dans un cas où il est déterminé que la somme des quantités de toner appliqué dépasse la quantité prédéterminée de toner appliqué, ledit moyen de commande de quantité appliquée (205) limite la quantité de toner appliqué des données d'image d'impression ayant été soumises au traitement de correction du gamma pour la couleur particulière afin d'éviter que la quantité de toner appliqué après la composition ne dépasse la quantité prédéterminée de toner appliqué.

8. Appareil de la revendication 1, comprenant en outre :

un moyen de calcul de rapport (303) qui calcule un rapport pour lequel les données d'image de motif d'inhibition de copie-falsification occupent les données d'image d'impression ;

un moyen de comparaison (303) qui compare à un seuil le rapport pour lequel les données d'image de motif d'inhibition de copie-falsification occupent les données d'image d'impression et qui est calculé par ledit moyen de calcul de rapport (303) ; et

un moyen de composition de commande de quantité appliquée (305) qui est exécuté dans un cas où le rapport pour lequel les données d'image de motif d'inhibition de copie-falsification occupent les données d'image d'impression n'est pas inférieur au seuil comme résultat de la comparaison effectuée par ledit moyen de comparaison (303),

ledit moyen de composition de commande de quantité appliquée (305) comportant :

le moyen de calcul de quantité appliquée (403) qui calcule la quantité de toner appliqué des données d'image d'impression et la quantité de toner appliqué des données d'image de motif d'inhibition de copie-falsification ;

le moyen de détermination (406) qui détermine, sur la base des quantités de toner appliqué calculées par ledit moyen de calcul de quantité appliquée (403), si la somme des quantités de toner appliqué dépasse la quantité prédéterminée de toner appliqué dans un cas où les données d'image d'impression et les données d'image de motif d'inhibition de copie-falsification sont soumises à une composition ;

le moyen de commande de quantité appliquée (407) qui, dans un cas où ledit moyen de détermination (406) détermine que la somme des quantités de toner appliqué dépasse la quantité prédéterminée de toner appliqué, limite la quantité de toner appliqué des données d'image d'impression afin d'éviter que la quantité de toner appliqué après la composition ne dépasse la quantité prédéterminée de toner appliqué ; et

le moyen de composition (409) qui effectue une composition des données d'image d'impression et des données d'image de motif d'inhibition de copie-falsification, générant les données d'image d'impression de motif d'inhibition de copie-falsification.

9. Appareil selon la revendication 8, dans lequel, dans un cas où le rapport pour lequel les données d'image de motif d'inhibition de copie-falsification occupent les données d'image d'impression est inférieur au seuil comme résultat de la comparaison effectuée par ledit moyen de comparaison (303), un moyen de composition de remplacement (304) est appliqué pour supprimer une information de couleur des données d'image d'impression et remplacer les données d'image d'impression par les données d'image de motif d'inhibition de copie-falsification dans une région dans laquelle les données d'image de motif d'inhibition de copie-falsification sont ajoutées.

10. Procédé de traitement d'image consistant à générer des données d'image d'impression de motif d'inhibition de copie-falsification en effectuant une composition de données d'image d'impression et de données d'image de motif d'inhibition de copie-falsification, le procédé comprenant :

une étape de calcul de quantité appliquée (S13) consistant à calculer une quantité de toner appliqué des données d'image d'impression et une quantité de toner appliqué des données d'image de motif d'inhibition de copie-falsification,

**caractérisé par** :

une étape de détermination (S14) consistant à déterminer, sur la base des quantités de toner appliqué calculées lors de l'étape de calcul de quantité appliquée, si la somme des quantités de toner appliqué des données d'image d'impression et des données d'image d'inhibition de copie-falsification dépasse une quantité prédéterminée de toner appliqué ;

une étape de commande de quantité appliquée (S15) consistant, dans un cas où il est déterminé lors de l'étape détermination que la somme des quantités de toner appliqué dépasse la quantité prédéterminée de toner appliqué, à limiter la quantité de toner appliqué des données d'image d'impression pour éviter que la somme des quantités de toner appliqué ne dépasse la quantité prédéterminée de toner appliqué, dans lequel, dans un cas où il est déterminé que la somme des quantités de toner appliqué ne dépasse pas la quantité prédéterminée de toner appliqué, la quantité de toner appliqué des données d'image d'impression n'est pas limitée lors de l'étape de commande de quantité appliquée (S15) ; et

une étape de composition (S17) consistant à effectuer une composition des données d'image d'impression dont la quantité de toner appliqué est limitée lors de l'étape de commande de quantité appliquée dans un cas où il est déterminé que la somme des quantités de toner appliqué dépasse la quantité prédéterminée de toner appliqué, et des données d'image de motif d'inhibition de copie-falsification, et à effectuer une composition des données d'image d'impression dont la quantité de toner appliqué n'est pas limitée dans un cas où il est déterminé que la somme des quantités de toner appliqué ne dépasse pas la quantité prédéterminée de toner appliqué, et des données d'image de motif d'inhibition de copie-falsification, afin de générer les données d'image d'impression de motif d'inhibition de copie-falsification.

**11.** Procédé de traitement d'image de la revendication 10, comprenant en outre :

une étape de calcul de rapport (S23) consistant à calculer un rapport pour lequel les données d'image de motif d'inhibition de copie-falsification occupent les données d'image d'impression ;

une étape de comparaison (S24) consistant à comparer à un seuil le rapport pour lequel les données d'image de motif d'inhibition de copie-falsification occupent les données d'image d'impression et qui est calculé lors de ladite étape de calcul de rapport ; et

une étape de composition de commande de quantité appliquée (S26) qui est exécutée dans un cas où le rapport pour lequel les données d'image de motif d'inhibition de copie-falsification occupent les données d'image d'impression n'est pas inférieur au seuil comme résultat de la comparaison effectuée lors de ladite étape de comparaison,

ladite étape de composition de commande de quantité appliquée (S26) comprenant :

l'étape de calcul de quantité appliquée (S13) consistant à calculer la quantité de toner appliqué des données d'image d'impression et une quantité de toner appliqué des données d'image de motif d'inhibition de copie-falsification ;

l'étape de détermination (S14) consistant à déterminer, sur la base des quantités de toner appliqué calculées lors de ladite étape de calcul de quantité appliquée, si la somme des quantités de toner appliqué dépasse la quantité prédéterminée de toner appliqué dans un cas où les données d'image d'impression et les données d'image de motif d'inhibition de copie-falsification sont soumises à une composition ;

l'étape de commande de quantité appliquée (S15) consistant, dans un cas où il est déterminé lors de ladite étape de détermination que la somme des quantités de toner appliqué dépasse la quantité prédéterminée de toner appliqué, à limiter la quantité de toner appliqué des données d'image d'impression afin d'éviter que la quantité de toner appliqué après la composition ne dépasse la quantité prédéterminée de toner appliqué ; et

l'étape de composition (S17) consistant à effectuer une composition des données d'image d'impression dont la quantité de toner appliqué est limitée lors de ladite étape de commande de quantité appliquée, et des données d'image de motif d'inhibition de copie-falsification, générant les données d'image d'impression de motif d'inhibition de copie-falsification.

**12.** Support lisible par ordinateur stockant un programme destiné à amener un ordinateur à mettre en oeuvre les étapes du procédé de la revendication 10 ou 11 lorsque le programme est exécuté sur l'ordinateur.

# F I G. 1

101 ~ CPU

102 ~ ROM

103 ~ RAM

104 ~ HDD

110 ~ IMAGE PROCESSING UNIT

DISPLAY UNIT ~ 105

OPERATION UNIT ~ 106

ENGINE I/F ~ 107

NETWORK I/F ~ 108

SCANNER I/F ~ 109

~ 111

# FIG. 2

FROM NETWORK I/F OR SCANNER I/F — 108,109

110

COPY-FORGERY-INHIBITED-PATTERN PRINTING DETERMINATION UNIT — 201

COLOR CONVERSION UNIT — 202

APPLIED AMOUNT CALCULATION UNIT — 203

DETERMINATION UNIT — 204

APPLIED AMOUNT CONTROL UNIT — 205

IMAGE FORMING UNIT — 206

COMPOSITION UNIT — 207

TO ENGINE I/F — 107

**F I G.  3**

FIRST EMBODIMENT

S11
COPY-FORGERY-INHIBITED-PATTERN PRINTING TO BE PERFORMED ? — NO

YES

S12
PERFORM COLOR CONVERSION

S13
CALCULATE AMOUNT OF APPLIED TONER OF PRINT IMAGE AND AMOUNT OF APPLIED TONER OF COPY-FORGERY-INHIBITED PATTERN IMAGE

S14
SUM OF AMOUNTS OF APPLIED TONER > MAXIMUM AMOUNT OF APPLIED TONER ?
YES — NO

S15
CONTROL AMOUNT OF APPLIED TONER OF PRINT IMAGE

S16
PERFORM IMAGE FORMING PROCESSING

S17
COMPOSITE PRINT IMAGE AND COPY-FORGERY-INHIBITED PATTERN IMAGE

S18
PRINT COPY-FORGERY-INHIBITED PATTERN IMAGE

S19
PERFORM NORMAL PRINTING

END

# F I G. 4

EP 2 312 824 B1

COPY-FORGERY-INHIBITED
PATTERN SYSTEM (COPY-FORGERY-INHIBITED
PATTERN/INFORMATION EMBEDDING)

**A**   +   COPY   →   COPY A

PRINT IMAGE          COPY-FORGERY-INHIBITED          COPY-FORGERY-INHIBITED
                     PATTERN IMAGE                   PATTERN PRINT IMAGE

CONTROL OF AMOUNT OF APPLIED TONER(※)

COPY

(1) AMOUNT OF
    APPLIED TONER IS
    CALCULATED.

Cyan          Magenta

A    A

A    A

Yellow        Black

(2) AMOUNT OF APPLIED TONER IS CONTROLLED.

COPY

(3) COMPOSITION

※ THIS CONTROL IS APPLIED WHEN AMOUNT OF APPLIED TONER EXCEEDS MAXIMUM AMOUNT UPON COMPOSITION.

# F I G.  5

# F I G.  6

```
                    ┌─────────┐
                    │  START  │
                    └────┬────┘
                         │
                         ▼               S21
                ╱─────────────────╲
               ╱   COMPOSITION      ╲          NO
              ╱     PRINTING          ╲──────────────────────┐
              ╲  TO BE PERFORMED      ╱                       │
               ╲        ?           ╱                         │
                ╲─────────────────╱                          │
                         │ YES                                │
                         ▼                                    │
              ┌──────────────────────┐                       │
              │      PERFORM          │  S22                  │
              │   COLOR CONVERSION    │                       │
              └──────────┬───────────┘                       │
                         ▼                                    │
              ┌──────────────────────┐                       │
              │ CALCULATE RATIO AT    │                       │
              │  WHICH COMPOSITE      │  S23                  │
              │ IMAGE OCCUPIES        │                       │
              │   PRINT IMAGE         │                       │
              └──────────┬───────────┘                       │
                         ▼            S24                     │
          NO    ╱─────────────────╲    YES                   │
        ┌───────╲ RATIO ≥ THRESHOLD? ╱────────┐              │
        │        ╲─────────────────╱          │              │
        ▼ S25                              S26 ▼              │
  ┌──────────────┐                   ┌──────────────┐         │
  │PERFORM       │                   │PERFORM       │         │
  │REPLACE       │                   │APPLIED AMOUNT│         │
  │COMPOSITION   │                   │CONTROL       │         ▼ S28
  └──────┬───────┘                   │COMPOSITION   │  ┌──────────────┐
         │                           └──────┬───────┘  │  PERFORM      │
         └──────────┬────────────────────────┘         │  NORMAL       │
                    ▼                                   │  PRINTING     │
         ┌──────────────────────┐                       └──────┬───────┘
   S27   │ OUTPUT COMPOSITE      │                              │
         │    PRINT IMAGE        │                              │
         └──────────┬───────────┘                              │
                    ▼                                          │
                    ◄──────────────────────────────────────────┘
                    ▼
              ┌─────────┐
              │   END   │
              └─────────┘
```

# FIG. 7

■ CASE IN WHICH RATIO AT WHICH COMPOSITE IMAGE OCCUPIES PRINT IMAGE IS LOW

PRINT IMAGE + COMPOSITE IMAGE → COMPOSITE PRINT IMAGE

REPLACE COMPOSITION

Cyan   Magenta

Yellow   Black

(1) DELETION

(2) ADDITION

■ CASE IN WHICH RATIO AT WHICH COMPOSITE IMAGE OCCUPIES PRINT IMAGE IS HIGH
APPLIED AMOUNT CONTROL COMPOSITION UNIT (FIRST EMBODIMENT) IS APPLIED.

EP 2 312 824 B1

# FIG. 8A

COPY-FORGERY-INHIBITED PATTERN SETTING I

| STAMP |

| COPY PROTECTED | INVALID | COPY |

| DATE |

| EYES ONLY | CONFIDENTIAL | FOR INTERNAL USE ONLY |

| COPY COUNT |

| SERIAL NUMBER |

| ARBITRARY |

| ID/USER |

| CANCEL SETTINGS | | NEXT |

# FIG. 8B

COPY-FORGERY-INHIBITED PATTERN SETTING II

BACKGROUND PATTERN | NONE ▼

PRINT SIZE | 7pt | MIDDLE | SMALL | LARGE

PRINT COLOR | CYAN | MAGENTA | BLACK

☐ LANDSCAPE PRINTING          ☐ TEXT/BACKGROUND CONTRAST

☐ OUTLINE CHARACTERS

| CANCEL SETTINGS | | OK |

# F I G. 9

FROM NETWORK I/F OR
SCANNER I/F ～ 108,109

～ 110

COPY-FORGERY-INHIBITED-PATTERN
PRINTING DETERMINATION UNIT ～ 401

COLOR CONVERSION UNIT ～ 402

APPLIED AMOUNT CALCULATION UNIT ～ 403

LUT GENERATION UNIT ～ 404

GM PROCESSING UNIT ～ 405

DETERMINATION UNIT ～ 406

APPLIED AMOUNT CONTROL UNIT ～ 407

IMAGE FORMING UNIT ～ 408

COMPOSITION UNIT ～ 409

TO ENGINE I/F ～ 107

# F I G. 10

```
        START
          │
          ▼
      ┌─S31
COPY-FORGERY-INHIBITED-PATTERN
PRINTING TO BE PERFORMED ?────────NO────┐
          │                             │
         YES                            │
          ▼                             │
PERFORM COLOR CONVERSION ──S32          │
          │                             │
          ▼                             │
S33── CALCULATE AMOUNT OF APPLIED       │
TONER OF PRINT IMAGE AND AMOUNT         │
OF APPLIED TONER OF COPY-FORGERY-       │
INHIBITED PATTERN IMAGE                 │
          │                             │
          ▼                             │
S34── GENERATE LUT FOR SPECIFIC         │
COLOR DESIGNATED AS COLOR OF            │
COPY-FORGERY-INHIBITED PATTERN          │
IMAGE IN COPY-FORGERY-INHIBITED-        │
PATTERN PRINTING                        │
          │                             │
          ▼                             │
S35── DETERMINE GM (GAMMA)              │
PROCESSING FOR SPECIFIC COLOR           │
DESIGNATED AS COLOR OF COPY-            │
FORGERY-INHIBITED PATTERN IMAGE         │
IN COPY-FORGERY-INHIBITED-PATTERN       │
PRINTING                                │
          │                             │
          ▼                             │
      ┌─S36                             │
SUM OF AMOUNTS OF APPLIED               │
TONER > MAXIMUM AMOUNT OF               │
APPLIED TONER?                          │
  YES ─┤       │                        │
       │      NO                        │
       ▼                                ▼
S37── CONTROL                        ┌─S41
AMOUNT OF                     PERFORM NORMAL
APPLIED TONER OF               PRINTING
PRINT IMAGE                         │
       │                            │
       ▼                            │
PERFORM IMAGE                       │
FORMING PROCESSING ──S38            │
       │                            │
       ▼                            │
COMPOSITE PRINT IMAGE               │
AND COPY-FORGERY-INHIBITED          │
PATTERN IMAGE ──S39                 │
       │                            │
       ▼                            │
PRINT COPY-FORGERY-INHIBITED        │
PATTERN IMAGE ──S40                 │
       │                            │
       ▼                            │
      END ◄─────────────────────────┘
```

# F I G. 11

EP 2 312 824 B1

COPY-FORGERY-INHIBITED
PATTERN SYSTEM (COPY-FORGERY-INHIBITED
PATTERN/INFORMATION EMBEDDING)

PRINT IMAGE + COPY-FORGERY-INHIBITED → COPY-FORGERY-INHIBITED
PATTERN IMAGE (Cyan) PATTERN PRINT IMAGE

GM (GAMMA) PROCESSING (※)

(1) VALUES OF APPLIED AMOUNTS OF PRINT IMAGE AND COPY-FORGERY-INHIBITED PATTERN IMAGE (CYAN) ARE CALCULATED.

(2) LUT IS GENERATED FOR SPECIFIC COLOR (CYAN).

Cyan    Magenta

Yellow    Black

(5) COMPOSITION

(3) GM (GAMMA) PROCESSING IS PERFORMED FOR SPECIFIC COLOR (CYAN).

(4) AMOUNT OF APPLIED TONER IS REDUCED.

※ THIS PROCESSING IS APPLIED WHEN AMOUNT OF APPLIED TONER EXCEEDS MAXIMUM AMOUNT UPON COMPOSITION.

# F I G.  12

## CYAN_PRE_SCB MATRIX

1 1024 1

| INPUT VALUE | DENSITY VALUE | AUTOMATIC DENSITY VALUE | OUTPUT VALUE |
|---|---|---|---|
| 0 | 0 | 0 | 0 |
| 0 | 0 | 0 | 0 |
| 0 | 0 | 0 | 0 |
| 0 | 0 | 0 | 0 |
| 0 | 0 | 0 | 0 |
| 1 | 0.001778 | 0 | 0 |
| 1 | 0.001778 | 0 | 0 |
| 1 | 0.001778 | 0 | 0 |
| 1 | 0.001778 | 0 | 0 |
| 1 | 0.001778 | 0 | 0 |
| 1 | 0.001778 | 0 | 0 |
| 3 | 0.003556 | 0 | 0 |
| 3 | 0.003556 | 0 | 0 |
| 3 | 0.003556 | 0 | 0 |
| 4 | 0.005333 | 0 | 0 |
| 4 | 0.005333 | 0 | 0 |
| 5 | 0.007111 | 0 | 0 |
| 5 | 0.007111 | 0 | 0 |
| 5 | 0.007111 | 0 | 0 |
| 5 | 0.007111 | 0 | 0 |
| 7 | 0.008889 | 0 | 0 |
| 7 | 0.008889 | 0 | 0 |
| 8 | 0.010667 | 0 | 0 |
| 965 | 1.283556 | 1.2135556 | 912 |
| 970 | 1.288889 | 1.2188889 | 916 |
| 971 | 1.290467 | 1.2206667 | 917 |
| 974 | 1.294222 | 1.2242222 | 919 |
| 976 | 1.297778 | 1.2277778 | 923 |
| 978 | 1.299556 | 1.2295556 | 923 |
| 982 | 1.304889 | 1.2348889 | 927 |
| 983 | 1.305567 | 1.2366667 | 929 |
| 986 | 1.310222 | 1.2402222 | 931 |
| 988 | 1.313778 | 1.2437778 | 935 |
| 990 | 1.315556 | 1.2455556 | 935 |
| 994 | 1.320889 | 1.2508889 | 939 |
| 996 | 1.324444 | 1.2544444 | 941 |
| 999 | 1.328 | 1.258 | 945 |
| 1002 | 1.331556 | 1.2615556 | 948 |
| 1006 | 1.336889 | 1.2668889 | 949 |
| 1008 | 1.340444 | 1.2704444 | 953 |
| 1011 | 1.344 | 1.274 | 957 |
| 1014 | 1.347556 | 1.2775556 | 957 |
| 1018 | 1.352889 | 1.2828889 | 964 |
| 1023 | 1.36 | 1.29 | 970 |
| 1023 | 1.36 | 1.29 | 970 |
| 1023 | 1.36 | 1.29 | 970 |
| 1023 | 1.36 | 1.29 | 970 |

Graph legend:
- ◆ ORIGINAL LUT
- ■ GENERATED LUT

Graph y-axis values: 1200, 1000, 800, 600, 400, 200, 0

Graph x-axis values: 1, 151, 301, 451, 601, 751, 901
76, 226, 376, 526, 676, 826, 976

**EP 2 312 824 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009027225 A